# EUROPÄISCHE PATENTSCHRIFT

(11) **EP 1 570 631 B1**
(45) Veröffentlichungstag und Bekanntmachung des Hinweises auf die Patenterteilung: **05.06.2013**
(21) Anmeldenummer: 03785552.5
(22) Anmeldetag: 05.12.2003
(51) Int. Cl.: H04M 1/02, H04M 1/23, H01H 13/702

(54) **EINGABEVORRICHTUNG, INSBESONDERE FÜR EIN MOBILTELEFON, MODUL MIT EINER EINGABEVORRICHTUNG, MOBILTELEFON UND VERFAHREN ZUR HERSTELLUNG**
INPUT DEVICE, ESPECIALLY FOR A MOBILE TELEPHONE, MODULE COMPRISING AN INPUT DEVICE, MOBILE TELEPHONE AND METHOD FOR THE PRODUCTION THEREOF
DISPOSITIF D'ENTREE, NOTAMMENT POUR UN TELEPHONE PORTABLE, MODULE COMPORTANT UN TEL DISPOSITIF D'ENTREE, TELEPHONE PORTABLE ET PROCEDE DE PRODUCTION CORRESPONDANT

(30) Priorität: 12.12.2002 DE 10258209
(43) Veröffentlichungstag der Anmeldung: 07.09.2005
(73) Patentinhaber: Hewlett-Packard Development Company, L.P., Houston, TX 77707 (US)
(72) Erfinder: FAUST, Bernhard, 83026 Rosenheim (DE)
(74) Vertreter: Samson & Partner
(86) Internationale Anmeldenummer: PCT/DE2003/004008
(87) Internationale Veröffentlichungsnummer: WO 2004/054212

(56) Entgegenhaltungen:
- EP-A- 0 367 204
- EP-A- 1 187 155
- DE-A- 2 350 176
- US-B1- 6 207 912

## Beschreibung

Die vorliegende Erfindung betrifft eine Eingabevorrichtung, insbesondere für ein Mobiltelefon, ein Modul mit einer Eingabevorrichtung und ein Mobiltelefon sowie ein Verfahren zur Herstellung einer Eingabevorrichtung, eines Moduls und/oder eines Mobiltelefons.

Die Designentwicklung steht bei modernen Geräten immer stärker im Vordergrund. Neben einem optischen Eindruck wird großer Wert auf eine stetig verbesserte Handhabbarkeit des jeweiligen Geräts gelegt. Dabei führt die Miniaturisierung tragbarer, elektronischer Geräte mit Eingabemöglichkeiten zu stetig kleineren Geräteoberflächen und Gerätevolumina, so dass Fortschritte in der technischen Entwicklung insbesondere bei Mobiltelefonen zu insgesamt immer kleineren Geräten führen. Der verfügbare Bauraum wird damit u.a. für Tastaturen immer geringer, wodurch die Bedienerfreundlichkeit derartiger Geräte stark leiden kann.

Ein Mindestvolumen einer Tastatur wird durch die folgenden Kriterien bestimmt: Tastenoberfläche, Tastenabstand und der die Tastenhöhe beeinflussende Tastenüberstand zum Gehäuse. Das Volumen von Tastaturen wird am kleinsten, wenn eine jeweilige Tastenkappe möglichst flach bleibt. Die Fläche von Tastaturen wird dann am kleinsten, wenn der Tastenabstand gegen Null geht, d.h. die Tasten werden nicht mehr durch Gehäusestege voneinander getrennt und damit einzeln formschlüssig im Gehäuse zurückgehalten, wie dies bei PC-Tastaturen bekannt ist.

Aufgrund der geringen Baugröße, ihrer großen mechanischen Beanspruchung durch Wählvorgänge und besonders durch den Versandt von schriftlichen Kurznachrichten in Form von SMS-Mitteilungen, aber auch einer Fertigung unter sehr großem Kostendruck werden nachfolgend ohne Beschränkung der Erfindung auf diesen Anwendungsbereich nur Mobiltelefone bzw. deren Eingabevorrichtungen betrachtet.

Nach dem Stand der Technik sind Eingabevorrichtungen mit Tasten bekannt, deren von außen her zugängliche Kappen einer Bedienoberfläche jeweils an mindestens einer Seite mit einem Bund versehen sind. Mit mindestens einem Bund stützt sich die Kappe gegen entsprechende Gehäusestege ab, um sich gegen ein Herausfallen oder Herausspringen ab zusichern. Ohne Gehäusestege, die in der Regel zwischen allen Tasten vorhanden sind, ist eine derartige Sicherung nur in einem Kontaktbereich zwischen Tastatur und Gehäuse bzw. Tastatur und Gehäuseoberschale möglich. Insbesondere die Tasten mit den Wählnummern 5 und 8 sind damit bei herkömmlichen Mobiltelefontastaturen nicht mehr ausreichend gegen ein Herausrutschen oder ein Herausreißen der gesamten im Gehäuse steglos gehaltenen Tastatur gesichert.

Bei einer bekannten Eingabevorrichtung mit steglosen Einzeltasten werden die Tasten auf einen flexiblen Kunststoffträger befestigt. Der flexible Kunststoffträger seinerseits muss zur Sicherung der Eingabevorrichtung in dem Gehäuse und/oder als Rückhaltesystem zum einen mechanisch sehr stabil und zum anderen zur Sicherstellung einer Bedienbarkeit der einzelnen Tasten auch hochflexibel sein. Diese Anforderungen stehen in so starken Widerspruch zueinander, dass ein gangbarer Kompromiss nur in stark eingeschränktem Masse zu finden ist. Eine dauerhafte Funktionssicherheit ist bei weiter schrumpfenden Gehäuseabmessungen nicht mehr gewährleistet.

Aus der EP 1 156 643 A2 ist eine Tastatur für ein Mobiltelefon bekannt, bei der die Tastaturkappen ohne Gehäusestege voneinander getrennt auf einem flexiblen, folienartigen Träger fixiert sind. Der Folienträger ist beispielsweise als Silikonträger ausgebildet. In einer Ausführungsform ist der Folienträger selber mit einer Leiterplatte verklebt, die ihrerseits in einem Überlappungsbereich formschlüssig durch ein umgebendes Gehäuse dadurch gehalten wird, dass der Folienträger einen umlaufenden Bund aufweist. Es ergibt sich demnach ein in der Regel rahmenartiger Überlappungsbereich zwischen dem Bund und beispielsweise einer Gehäuse-Oberschale, in der die Tastatur über Kombinationen aus Haken-Ösen und/oder Stift-Loch eingefasst, form- oder kraftschlüssig gehalten und dadurch fixiert ist.

Ein überlappender Kontaktbereich zwischen einer jeweiligen Tastatur und einem Gehäuse wird jedoch aufgrund der Miniaturisierung der Gesamtgeräte immer geringer, um ein Mindestmaß an Bedienkomfort und Eingabesicherheit bei nicht weiter schrumpfenden Tastengröße sicherstellen zu können. Eine mechanische Sicherung einer Tastatur oder eines Tastaturmoduls relativ zu einem Gehäuse in der bekannten Form einer Verharkung über Kombinationen von Ausnehmungen oder Hinterschneidungen mit korrespondierenden Stegen, Haken und/oder Zapfen reicht dann nicht mehr aus. Auch hat sich ein einfaches und fertigungstechnisch gut realisierbares Verkleben einer Tastatur oder eines Tastaturmoduls mit einer Oberschale für eine dauerhafte Sicherung der Tasten gegen ein Herausfallen oder Herausspringen der Tasten und/oder des Tastaturträgers mit allen Tasten als unzureichend erwiesen.

Dadurch wird gerade in einem Bereich um die Eingabevorrichtung bzw. die Tastatur eines Mobiltelefons herum viel Bauraum benötigt, der besser zur Steigerung bei Benutzerfreundlichkeit durch eine relative Vergrößerung der einzelnen Tasten verwendet werden könnte. Alternativ kann nur das Design unter Anpassung auf derzeit technisch realisierbare Formen verändert werden, beispielsweise durch eine Vergrößerung des Gehäuses einzig zur sicheren Fixierung der Tastatur. Damit würde aber das Gesamtgerät ein Gehäuse aufweisen, das größer wäre, als es eigentlich technisch notwendig wäre. Dieser Lösungsansatz würde jedoch einer Miniaturisierung entgegenstehen.

DE 2 350 176 A offenbart eine Tastatureinheit für einen elektrischen Rechner. Die Tastatureinheit umfasst fest mit einer Federplatte verbundene Tasten. Die Federplatte weist Federbereiche auf, die die Tasten führen und halten. Zur Befestigung in einem Gehäuse sind durch Öffnungen in innen liegenden Bereichen der Federplatte geführte Schrauben vorgesehen.

Der vorliegenden Erfindung liegt daher die Aufgabe zugrunde, eine Eingabevorrichtung, ein Modul mit einer Eingabevorrichtung, ein Mobiltelefon und ein Herstellungsverfahren vorzuschlagen, die eine verbesserte dauerhafte Fixierung einer Eingabevorrichtung an und/oder innerhalb eines Gehäuses ermöglichen.

Diese Aufgabe wird erfindungsgemäß durch eine Eingabevorrichtung, ein Modul und ein Mobiltelefon sowie ein Verfahren gemäß den unabhängigenansprüchen gelöst. Die Unteransprüche definieren jeweils bevorzugte und vorteilhafte Ausführungsformen der Erfindung.

Eine erfindungsgemäße Eingabevorrichtung, insbesondere für ein Mobiltelefon, mit mindestens einer Kappe, die zur Ausbildung mindestens einer zugeordneten Taste derart mit einem flexiblen Träger verbunden ist, dass durch Drücken einer so gebildeten Taste ein Eingabesignal erzeugt wird, ist dadurch gekennzeichnet, dass zwischen einer ersten Ebene mit mindestens der Kappe und einer zweiten Ebene des mit der Kappe verbundenen flexiblen Trägers mindestens ein mechanisch stabiles Fixierungsmittel derart angeordnet ist, dass die Kappe mit dem flexiblen Träger zu einer im wesentlichen punktförmigen Kraftübertragung durch die Ebene des Fixierungsmittels hindurch ausgebildet ist, und dass das Fixierungsmittel in einem Bereich mindestens einer Endkante zur Sicherung der Eingabevorrichtung in oder an einem Gehäuse ausgebildet ist. Zwischen Kappe und Träger ist das Fixierungsmittel formschlüssig eingeschlossen, wobei eine Beweglichkeit der Kappe als dem in einer Benutzeroberfläche liegenden Bedienteil in den zur Tastenbetätigung erforderlichen Grenzen sichergestellt ist.

In einer Weiterbildung der Erfindung ist das mechanisch stabile Fixierungsmittel als Metallblech ausgeführt. Vorteilhafterweise ist das Metallblech in einer Ausführungsform der Erfindung als Gitter mit Ausnehmungen in Form von Stanzungen ausgebildet, durch die hindurch die einzelnen Tasten in Betätigungsrichtung in zum Auslöschen eines Signals erforderlichen Grenzen beweglich sind. Aufgrund einer anzustrebenden und in Form eines Metallgitters auch sicher darstellbaren mechanisch ausreichend stabilen Fixierungsmittels können die Ausnehmungen auch sehr groß gewählt werden, so dass insbesondere eine sehr gute oder im Wesentlichen vollständige Hinterleuchtung der jeweiligen Tasten-Kappen möglich ist.

In einer bevorzugten Ausführungsform der Erfindung ist eine Kappe insbesondere als Ergebnis eines thermoplastischen Formungs- und/oder Umformungsprozesses an dem flexiblen Träger nach einem Zusammenbau des Fixierungsmittels mit dem flexiblen Träger angeformt. Dabei weist die Kappe im Bereich der Bedienoberfläche normal zu einer Betätigungsrichtung in mindestens einer Raumrichtung eine Abmessung auf, die größer als ein Durchbruch in dem Fixierungsmittel ist. Vorzugsweise weist die Kappe mindestens in einer Schnittebene parallel zu der Betätigungsrichtung eine ungefähr pilzartige Querschnittsflächenform auf. Der mindestens in einem Bereich einer Taste durch eine Ausnehmung des Fixierungsmittels hindurchgreifende flexible Träger bildet in einer Ausführungsform der Erfindung sodann mit dem Fixierungsmittel ein untrennbares Modul. Damit wird neben einer verbesserten Bedienung durch eine Vergrößerung der in Berührung mit einem Finger einer Bedieners stehenden Kappe auch erreicht, dass die Kappe im Fall eines übergroßen Kraftaufwandes bei der Signaleingabe nicht durch eine Ausnehmung in dem Fixierungsmittel hindurch gesteckt oder dauerhaft eingedrückt werden kann. Die Kappe wirkt im Zusammenwirken mit dem Fixierungsmittel gleichsam als Begrenzung einer Bewegung in Betätigungsrichtung.

In einer vorteilhaften Ausführungsform ist jedoch statt eines einstoffigen Aufbaus der mindestens einen Taste und des flexiblen Trägers ein mehrteiliger und insbesondere mehrstoffiger Aufbau vorgesehen. Hierin werden die Kappen aus einem insbesondere transluzenten Material als Einzelteile gefertigt und mit dem flexiblen Träger verbunden. Die Materialen können damit ihrem jeweiligen Einsatzzweck entsprechend optimal ausgewählt werden, also die Kappe hinsichtlich einer guten und dauerhaft abnutzungssicheren Bedruckbarkeit bei gleichzeitig guter Hinterleuchtung und der flexible Träger hinsichtlich einer dauerhaft guten Flexibilität bei Dauerbeanspruchung ohne größere Riss- und Verschleißneigung und guter Beständigkeit auch gegenüber Verschmutzungen.

Vorzugsweise wird die mindestens eine Kappe an und/oder auf einen Vorsprung des flexiblen Trägers fixiert. Hierbei können wiederum alle bekannten Verfahren von Kleben, Schweißen und/oder formschlüssigen Verbindung mit oder ohne thermische Behandlung und auch Kombinationen daraus eingesetzt werden.

Damit ist in den beiden vorstehend beschriebenen Ausführungsformen sichergestellt, dass eine Kappe oder Taste der Eingabevorrichtung in Richtung einer Betätigungsbewegung und entgegen einer solchen Betätigungsbewegung gegen ein Herausspringen gesichert ist.

Als steglose Tasten greifen je nach Ausführungsform entweder die Kappen an einer bedienbaren Außenseite bzw. Bedienoberfläche die jeweiligen Ausnehmungen überkragend durch die Ausnehmungen hindurch, oder aber Vorsprünge o.ä. des flexiblen Trägers greifen durch die Ausnehmungen in dem stabile Fixierungsmittel hindurch und werden durch die jeweiligen Kappen überdeckt. Entgegen der Betätigungsrichtung einer jeden Taste werden die Tasten damit in einem jeweiligen Gehäuse sicher festgehalten.

In einer Ausbildung der Erfindung ist mindestens eine Endkante des Fixierungsmittels zur Sicherung der Eingabevorrichtung in oder an einem Gehäuse als eine Art von überstehendem Rand und/oder Bund ausgebildet, vorzugsweise sind dies zwei jeweils gegenüberliegende Endkanten des Fixierungsmittels. Diese Bereiche können weitestgehend ohne Einfluss auf die eigentliche Eingabevorrichtung frei ausgestaltet werden.

In einer besonders vorteilhaften Weiterbildung der Erfindung ist ein erfindungsgemäßes Fixierungsmittel als Schutz gegen elektrostatische Entladung bzw. als ESD-Schutz ausgebildet. Dazu ist das Fixierungsmittel als elektrisch leitendes Element in dem Gehäuse intern mit einer Masseleitung verbunden, beispielsweise durch einen Klemmkontakt, der sich im Zuge des Zusammenbaus des Gehäuses mit der Eingabevorrichtung automatisch ergibt. Damit ist eine Ableitung von ESD-Funken sichergestellt.

Ein Fixierungsmittel wird in einer Ausführungsform der Erfindung bei kleinen Spannweiten bzw. Öffnungsweiten eines Gehäusedurchbruchs lose in das jeweilige Gehäuse eingelegt. Bei größeren Spannweiten wird das Fixierungsmittel jedoch vorzugsweise als Blechteil fest oder einstückig mit dem Gehäuse verbunden. In einer Ausführungsform werden das Fixierungsmittel und ein zugehöriges Gehäuseteil dazu einstoffig ausgebildet und einstückig in einem im Wesentlichen gemeinsamen Fertigungsschritt hergestellt.

Erfindungsgemäß wird hier nun durch insgesamt ein einfaches Fertigungsverfahren die Möglichkeit geschaffen, eine einfach und zuverlässig fixierbare Eingabevorrichtung an oder in einem Gehäuse zu fixieren, wobei die Eingabevorrichtung als ganzes in zwei Raumachsen frei beweglich in einem Gehäuse liegt und ohne zusätzliche Klebung oder andere Verbindungstechniken durch das Fixierungsmittel als Rückhalteblech in dem Gehäuse zurückfestgehalten wird. Zwangsläufig und ohne weitere Maßnahmen wird die eigentliche Eingabevorrichtung im Wesentlichen durch Ausnehmungen in dem Fixierungsmittel, durch welche die jeweiligen steglosen Tasten hindurchgreifend ausgebildet sind, relativ zu dem Gehäuse zentriert. Dies wirkt sich günstig auf eine Toleranzkette innerhalb des Gesamtgerätes aus, da hierdurch keine überbestimmten Systeme gebildet werden.

Neben einer zweidimensionale Form kann dabei auch eine dreidimensionale Form einer Tastaturoberfläche mechanisch unterstützt oder gar realisiert werden. Dies wird beispielsweise durch Biegen des Fixierungsmittels in einem entsprechend stabilen Gehäuse oder durch Biegestanzen des Fixierungsmittels bei dessen Herstellung bewerkstelligt.

Zudem können auch elektrostatisch entladende Eigenschaften einer erfindungsgemäßen Tastatur ohne Mehrkosten genutzt werden. Auch zur Ausbildung eines geschlossenem Faraday'schen Käfigs kann eine erfindungsgemäße Eingabevorrichtung bei entsprechender Ausrüstung des eigentlichen Geräte-Gehäuses herangezogen werden.

Nicht zuletzt kann als Nebeneffekt der vorgeschlagenen technischen Maßnahme ein sichtbarer metallischer Reflex des Blech-Gitters mindestens in den Tasten-Zwischenräumen für Design-Zwecke genutzt werden. Durch eine Oberflächenbehandlung des Blech-Gitters, beispielsweise durch Eloxierung und/oder Einfärbung kann dieser Effekt über den gesamten Bereich farblicher Gestaltungsmöglichkeiten genutzt werden, wie nachfolgend unter Bezug auf die Abbildung der Zeichnung anhand konkreter Beispiele im Detail beschrieben wird.

Durch ein erfindungsgemäßes Fixierungsmittel werden ein fehlender Gehäusesteg, Bunde o.ä. ersetzt, die sonst üblicherweise Tasten einer Eingabevorrichtung in einem jeweiligen Gehäuse sicher verankern.

Die vorliegende Erfindung wird nachfolgend unter Bezugnahme auf die beigefügte Zeichnung anhand eines bevorzugten Ausführungsbeispiels. In der Zeichnung zeigen:
- Figur 1: zeigt eine dreidimensionale Explosionsdarstellung einer Ausführungsform einer erfindungsgemäßen Eingabevorrichtung und
- Figur 2: stellt eine Schnittdarstellung der Eingabevorrichtung von Figur 1 dar.

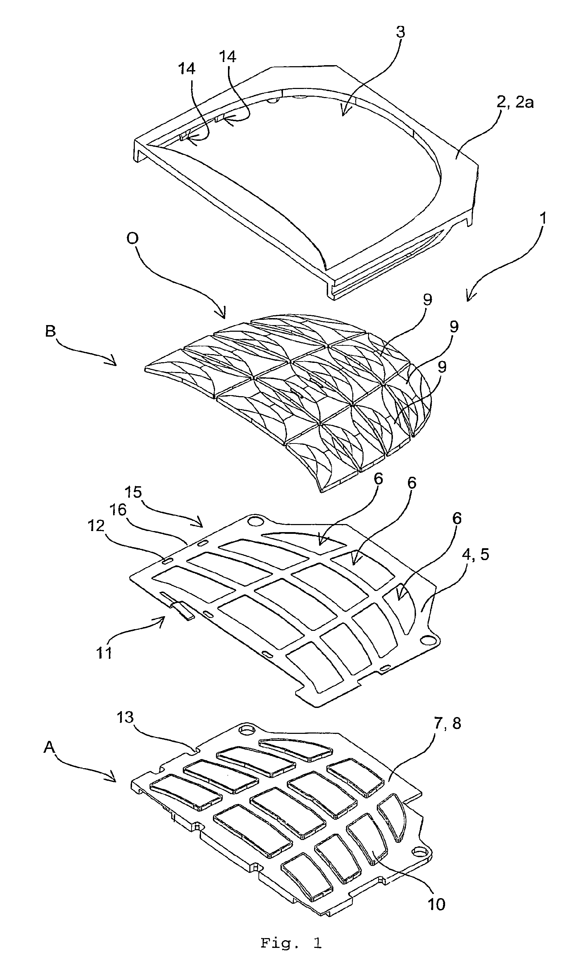

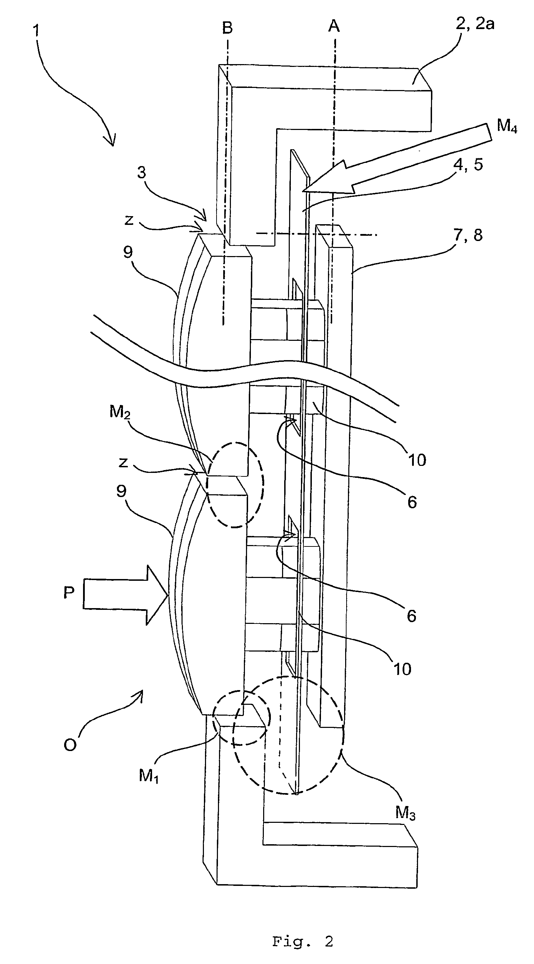

Elemente mit gleicher Funktion und Wirkungsweise sind in den Figuren 1 und 2 durchgehend jeweils mit denselben Bezugszeichen versehen.

In der dreidimensionale Explosionsdarstellung von Figur 1 ist ein prinzipieller Zusammenbau einer erfindungsgemäßen Eingabevorrichtung 1 als Tastenfeld 1a für ein Mobilfunktelefon dargestellt. Zur Ausbildung einer sicheren Verankerung des Tastenfeldes 1a in einem Gehäuseteil 2, hier einer Oberschale 2a eines hier nicht weiter dargestellten Gehäuses, bzw. eines Gehäusedurchbruchs 3 wird ein mechanisch stabiles Fixierungsmittel 4 in Form eines ausgestanzten Metallgitters 5 mit Ausnehmungen 6 zwischen bzw. im Übergang einer Ebene A eines flexiblen Trägers 7 in Form einer Trägermatte 8 und einer Ebene B mit einzelnen Tasten-Kappen 9 angeordnet.

Zur Ausbildung einer Eingabevorrichtung 1 mit steglosen Tasten greifen Vorsprünge 10 des flexiblen Trägers 7 durch die jeweiligen Ausnehmungen 6 in dem stabile Fixierungsmittel 4 hindurch und werden durch die jeweiligen Kappen 9 überdeckt. Entgegen einer Betätigungsrichtung P einer jeden Taste werden die Tasten damit in einem jeweiligen Gehäuse sicher festgehalten.

Neben einer hohen mechanischen Beanspruchbarkeit des Fixierungsmittels 4 wird als Nebenaspekt auch dessen metallisch leitende Eigenschaft genutzt, indem das Fixierungsmittel 4 als Schutzvorrichtung gegen elektrostatische Entladungen eingesetzt wird. Hierzu ist ein ESD-Anschluss 11 als Stanz-Biegeteil an dem Fixierungsmittel 4 ausgebildet. In einem zusammengebauten Zustand ist dieser ESD-Anschluss 11 unter Einwirkung der Anpresskraft des Gehäuseoberteils in Verrastung mit dem restlichen Gehäuse des Mobiltelefons mit einer Erdungsleitung der internen Elektronik verbunden.

Ferner sind an dem Fixierungsmittel 4 Ausnehmungen 12 und dazu korrespondierend vergleichsweise flache Einkerbungen 13 in dem flexiblen Träger 7 vorgesehen. Aufgrund der höheren mechanischen Leistungsfähigkeit des Metallblechs kann das Fixierungsmittel 4 allein über die Ausnehmungen 12 in Zusammenspiel mit Zapfen 14 etc. der Oberschale 2a des Gehäuses eine ausreichende Fixierung innerhalb des Gehäuses sicherstellen. Ein entsprechender Rand- und Überlappungsbereich wäre für den flexiblen Träger 7 zum Übernehmen derselben Aufgabe zu knapp gemessen gewesen, so dass er hierfür gar nicht mehr herangezogen werden muss. Hier sind dementsprechend zur Erleichterung einer Positionierung rein beim Zusammenbau nur flache Einkerbungen 14 vorgesehen.

Zur Ausbildung einer Eingabevorrichtung 1 in Form eines vollständigen Moduls kann unterhalb der flexiblen Trägermatte 7 mit nicht im Detail dargestellten Schaltkontakten in bekannter Weise eine bedruckte Schaltplatine zur Ausbildung elektrischer Schließerkontakte angeordnet werden. Diese kann mit der flexiblen Trägermatte 7 auch einstückig verbunden sein. Aber auch dieser Aufbau einer fertigen Eingabevorrichtung als einstückiges Modul verhält sich hinsichtlich einer Positionierung relativ zu dem Gehäusedurchbruch 3 bzw. der Gehäuseöffnung für die Eingabetastatur und deren Fixierung in einer vorbestimmten Lage genauso, wie dies bereits eine in der Figur 1 dargestellte, rein aus der flexiblen Trägermatte 7 mit den daran fixierten einzelnen Tasten-Kappen 9 bestehende Anordnung tut.

Es wird daher unter Bezug auf die Schnittdarstellung von Figur 2 auf diese durch das Fixierungsmittel 4 bewirkte Art der Positionierung und Fixierung im Unterschied zum Stand der Technik eingegangen werden. Dazu ist die Darstellung von Figur 2 als Schnitt entlang einer Ebene A-A von Figur 1 gekürzt dargestellt worden. Durch gestrichelte Kreise sind die drei Stellen gekennzeichnet, bei denen Sicherungsmaßnahmen nach dem Stand der Technik ergriffen werden: M1 deutet die Position an, in der ein Bund an der Kappe 9 im Bereich des Gehäusedurchbruchs 3 der Oberschale 2a zur Sicherung untergegriffen hat. M2 deutet eine Lagesicherung durch einen analog zu M1 ausgebildeten Untergriff zwischen benachbarten Kappen 9 an. M3 zeigt eine gängige Fixierung einer bekannten Eingabevorrichtung 1 durch einen Bund im Bereich des flexiblen Trägers 7 an. Hier greift ein wesentlicher Gedanke der vorliegenden Erfindung an, wie in der Abbildung von Figur 2 im Bereich M3 durch die gestrichelte Einblendung eines Bundes 16 in einem Endbereich des mechanisch stabilen Fixierungsmittels 4 dargestellt: In einer Richtung P einer jeweiligen Tastenbewegung bzw. Betätigungsrichtung ist der flexible Träger 7 mit an den jeweiligen Vorsprüngen 10 des flexiblen Trägers 7 fixierten Tasten-Kappen 9 in ausreichendem Maße frei beweglich, während der flexible Träger 7 in einer Ebene normal zur der Betätigungsrichtung P durch die jeweiligen Ausnehmungen 6 in dem stabilen Fixierungsmittel 4 nur sehr wenig beweglich gehalten ist.

Um ein Herausreißen der Eingabevorrichtung 1 durch den Endbereich 3 hindurch sicher zu unterbinden und zugleich eine automatische Lagefixierung zu bewirken ist mindestens eine Endkante des Fixierungsmittels 4 ist zur Sicherung der Eingabevorrichtung 1 in oder an einem Gehäuse 2, 2a als eine Art von überstehendem Rand und/oder Bund 16 in dem Endbereich des mechanisch stabilen Fixierungsmittels 4 ausgebildet. Bevorzugt sind dies, wie in der Skizze von Figur 2 dargestellt, zwei jeweils gegenüberliegende Endkanten 19 des Fixierungsmittels 4.

So können mindestens im Bereich der Mobiltelefone durch loses Einlegen eines Fixierungsmittels 4 in Form eines gestanzten Metallgitterblechs 5 zwischen Tastenkappen und flexiblem Trägermaterial auf einer tiefer in einem jeweiligen Gehäuse 2 liegenden Ebene Formen von Rückhaltestegen realisiert werden, durch die eine steglose Anordnung der eigentlichen Tasten in Form der Kappen 9 an einer Bedienoberfläche O möglich ist.

Als Besonderheit erzeugt das Fixierungsmittel 4 in Form eines gestanzten Metallgitterblechs 5 in Zwischenräumen z zwischen den einzelnen Tasten-Kappen 9 oder den Tasten-Kappen 9 und der angrenzenden Oberschale 2a des Gehäuses durch seien metallischen Glanz eine besondere optische Wirkung, die je nach Oberflächengestaltung des Metallgitterblechs 5 im Hinblick auf ein Gesamtkonzept des Designs ausgestaltet werden kann, beispielsweise durch Einfärbungen etc. Die sich ergebenden Zwischenräume z zwischen den Kappen 9 und/oder einem Gehäuseteil 2 werden ohne zusätzlichen Aufwand hinsichtlich einer metallischen Optik oder sonstigen Design-Aspekten genutzt.

Im Rahmen der vorliegenden Darstellung der Ausführungsformen der Erfindung wurden insbesondere folgende Bezugszeichen und Abkürzungen verwendet:

| | |
|---|---|
| 1 | Eingabevorrichtung |
| 1a | Tastenfeld |
| 2 | Gehäuseteil |
| 2a | Oberschale eines Gehäuses |
| 3 | Gehäusedurchbruch |
| 4 | mechanisch stabiles Fixierungsmittel |
| 5 | Metallgitter |
| 6 | Ausnehmung in 4,5 |
| 7 | flexibler Träger |
| 8 | Trägermatte |
| 9 | Tasten-Kappe |
| 10 | Vorsprung an 7,8 |
| 11 | ESD-Anschluss an 4,5 |
| 12 | Ausnehmung in 4 |
| 13 | Einkerbung in 7 |
| 14 | Zapfen in 2a |
| 15 | Endkante von 4,5 |
| 16 | Bund an 4,5 |
| | |
| | |
| | |
| | |
| A | Ebene des flexiblen Trägers 7 |
| B | Ebene mit einzelnen Tasten-Kappen 9 |
| M1 | ... M4 |
| | Bereiche von Fixierungsmaßnahmen |
| P | Richtung einer Tastenbewegung / Betätigungsrichtung |
| O | Benutzeroberfläche |
| SMS | Short message service |
| Z | Zwischenraum |

## Patentansprüche

1. Eingabevorrichtung, insbesondere für ein Mobiltelefon, mit mindestens einer Kappe (9), die zur Ausbildung mindestens einer zugeordneten Taste derart mit einem flexiblen Träger (7) fest verbunden ist, dass durch Drücken einer so gebildeten Taste ein Eingabesignal erzeugt wird, wobei
zwischen einer ersten Ebene (B) mit den mindestens einen Kappe (9) und
einer zweiten Ebene (A) des mit der mindestens einen Kappe (9) verbundenen flexiblen Trägers (7) mindestens.
ein mechanisch stabiles Fixierungsmittel (4) derart angeordnet ist, dass die mindestens eine Kappe (9) mit dem flexiblen Träger (7) zu einer im wesentlichen punktförmigen Kraftübertragung durch eine Ebene des Fixierungsmittels (4) hindurch ausgebildet ist, **dadurch gekennzeichnet, dass**
das Fixierungsmittel (4) in einem Bereich mindestens einer Endkante (15) zur Sicherung der Eingabevorrichtung (1) in oder an einem Gehäuse ausgebildet ist.

2. Eingabevorrichtung nach Anspruch 1,
**dadurch gekennzeichnet,**
**dass** das mechanisch stabile Fixierungsmittel (4) als Metallblech ausgeführt ist.

3. Eingabevorrichtung nach einem der beiden vorhergehenden Ansprüche,
**dadurch gekennzeichnet,**
**dass** das Fixierungsmittel (4) als Gitter mit Ausnehmungen insbesondere in Form von Stanzungen ausgebildet ist,
durch die hindurch die mindestens eine Taste in erforderlichen Grenzen in einer Betätigungsrichtung (P) beweglich sind.

4. Eingabevorrichtung nach einem der vorhergehenden Ansprüche,
**dadurch gekennzeichnet,**
**dass** die mindestens eine Kappe (9) im Bereich der Bedienoberfläche (O) normal zu einer Betätigungsrichtung (P) in mindestens einer Raumrichtung eine Abmessung aufweist, die größer als ein Durchbruch (6) in dem Fixierungsmittel (4) ist.

5. Eingabevorrichtung nach einem der vorhergehenden Ansprüche,
**daduch gekennzeichnet**,
dass die mindestens eine Kappe (9) an einer bedienbaren Außenseite bzw. Bedienoberfläche (O) die jeweilige Ausnehmung (6) überkragend durch die Ausnehmungen hindurchgreifend ausgebildet sind.

6. Eingabevorrichtung nach einem der vorhergehenden Ansprüche,
**dadurch gekennzeichnet,**
**dass** die mindestens eine Kappe (9) mindestens in einer Schnittebene parallel zu der Betätigungsrichtung (P) eine ungefähr pilzartige Querschnittsflächenform aufweist.

7. Eingabevorrichtung nach einem der vorhergehenden Ansprüche,
**dadurch gekennzeichnet,**
**dass** mindestens ein Vorsprung (10) des flexiblen Trägers (7) durch die Ausnehmungen (6) in dem stabile Fixierungsmittel (4) hindurchgreifend ausgebildet ist und durch die mindestens eine jeweils an dem mindestens einen Vorsprung (10) fixierte Kappe (9) überdeckt ist.

8. Eingabevorrichtung nach einem der vorhergehenden Ansprüche,
**dadurch gekennzeichnet,**
**dass** mindestens eine Endkante des Fixierungsmittels (4) zur Sicherung der Eingabevorrichtung (1) in oder an einem Gehäuse als eine Art von überstehendem Rand und/oder Bund (16) ausgebildet ist.

9. Eingabevorrichtung nach dem vorhergehenden Anspruch,
**dadurch gekennzeichnet,**
**dass** zwei jeweils gegenüberliegende Endkanten (15) des Fixierungsmittels (4) als eine Art von überstehendem Rand und/oder Bund (16) ausgebildet sind.

10. Eingabevorrichtung nach einem der vorhergehenden Ansprüche,
**dadurch gekennzeichnet,**
**dass** des Fixierungsmittel (4) lose in das jeweilige Gehäuse eingelegt ist, insbesondere bei kleinen Spannweiten oder Öffnungsweiten eines Gehäusedurchbruchs (3) bzw. einer Tastaturöffnung.

11. Eingabevorrichtung nach einem der vorhergehenden Ansprüche,
**dadurch gekennzeichnet,**
**dass** das Fixierungsmittel (4) fest und/oder einstückig mit dem Gehäuse verbunden ist, wobei das Fixierungsmittel (4) vorzugsweise als Blech-Stanz-Biegeteil ausgebildet ist.

12. Eingabevorrichtung nach einem der vorhergehenden Ansprüche,
**dadurch gekennzeichnet,**
**dass** das Fixierungsmittel (4) und ein zugehöriges Gehäuseteil (2, 2a) einstoffig ausgebildet und einstückig in einem im Wesentlichen gemeinsamen Fertigungsschritt hergestellt sind.

13. Eingabevorrichtung nach einem der vorhergehenden Ansprüche,
**dadurch gekennzeichnet,**
**dass** unter Einsatz des Fixierungsmittels (4) eine dreidimensionale Form einer Tastaturoberfläche oder Benutzeroberfläche (O) realisiert ist.

14. Eingabevorrichtung nach dem vorhergehenden Anspruch,
**dadurch gekennzeichnet,**
**dass** das Fixierungsmittel (4) als ESD-Schutz ausgebildet ist.

15. Modul zur Eingabe von Signalen elektrischer und/oder mechanischer Form,
**dadurch gekennzeichnet,**
**dass** es eine Eingabevorrichtung (1) nach einem oder mehreren der vorhergehenden Ansprüche umfasst.

16. Mobiltelefon oder sonstige Sende- und/oder Empfangseinheit zur Übertragung und/oder Darstellung von Daten in Form von Text- und/oder Bilddaten mit oder ohne Ton, die als Elemente einer zu übermittelnden Datenmenge nach gleichen oder unterschiedlichen Standards codiert sind,
**dadurch gekennzeichnet,**
**dass** das Mobiltelefon eine Eingabevorrichtung nach einem der vorstehenden Ansprüche 1 bis 14 und/oder ein Modul nach dem vorhergehenden Anspruch umfasst und insbesondere als Teilnehmer-Endgerät ausgebildet ist.

17. Verfahren zur Herstellung einer Eingabevorrichtung, insbesondere nach einem oder mehreren der Ansprüche 1 bis 14, bei dem ein flexibler Träger (7) mit mindestens einer Kappe (9) zur Ausbildung mindestens einer Taste hergestellt wird,
**dadurch gekennzeichnet,**
**dass** der flexible Träger (7) mit mindestens einem Vorsprung (10) durch eine Ausnehmung (6) eines Fixierungsmittels (4) teilweise hindurchgeführt wird und die mindestens eine Kappe (9) insbesondere als Ergebnis eines thermoplastischen Formungs- und/oder Umformungsprozesses an dem flexiblen Träger (7) nach einem Zusammenbau des Fixierungsmittels (4) mit dem flexiblen Träger angeformt wird.

18. Verfahren nach dem vorhergehenden Anspruch,
**dadurch gekennzeichnet,**
**dass** die das Mobiltelefon Kappe aus einem insbesondere transluzenten Material als Einzelteile gefertigt und mit dem flexiblen Träger verbunden wird.

19. Verfahren nach einem der beiden vorhergehenden Ansprüche,
**dadurch gekennzeichnet,**
**dass** die mindestens eine Kappe (9) an und/oder auf einen Vorsprung (10) des flexiblen Trägers (7) mittels Kleben, Schweißen und/oder formschlüssiger Verbindung mit oder ohne thermische Behandlung oder Kombinationen daraus fixiert wird. mit oder ohne thermische Behandlung oder Kombinationen daraus

## Claims

1. Input device, in particular for a mobile telephone, having at least one cap (9), which for forming at least one associated button is fixedly connected to a flexible support (7) in such a way that an input signal is generated by pressing a button formed in this way, wherein at least one mechanically stable fixing means (4) is situated between a first plane (B) having the at least one cap (9) and a second plane (A) of the flexible support (7) connected to the at least one cap (9) in such a way that the at least one cap (9) together with the flexible support (7) is configured to transmit force in an essentially punctiform manner through a plane of the fixing means (4), and **characterized in that**
in an area at least one end edge (15) the fixing means (4) is configured for securing the input device (1) in or on a housing.

2. Input device according to Claim 1,
**characterized in that**
the mechanically stable fixing means (4) is configured as a metal sheet.

3. Input device according to one of the two preceding claims,
**characterized in that**
the fixing means (4) is configured as a grid having recesses in particular in the form of punchings, through which the at least one button is movable within required limits in an activation direction (P).

4. Input device according to one of the preceding claims,
**characterized in that**
in the area of the user interface (O), the at least one cap (9) has a dimension which is perpendicular to an activation direction (P) in at least one spatial direction and which is larger than a cutout (6) in the fixing means (4).

5. Input device according to one of the preceding claims,
**characterized in that**
the at least one cap (9) has a design which at an operable outer side or user interface (O) engages through the recesses, projecting beyond the particular recess (6).

6. Input device according to one of the preceding claims,
**characterized in that**
the at least one cap (9) has an approximately mushroom-like cross-sectional surface shape, at least in a sectional plane parallel to the activation direction (P).

7. Input device according to one of the preceding claims,
**characterized in that**
at least one projection (10) of the flexible support (7) has a configuration which engages through the recesses (6) in the stable fixing means (4) and is covered by the at least one cap (9) which in each case is fixed on the projection (10).

8. Input device according to one of the preceding claims,
**characterized in that**
at least one end edge of the fixing means (4) is configured for securing the input device (1) in or on a housing as a type of projecting border and/or collar (16).

9. Input device according to the preceding claim,
**characterized in that**
two end edges (15) of the fixing means (4) which in each case are situated opposite one another are configured as a type of projecting border and/or collar (16).

10. Input device according to one of the preceding claims,
**characterized in that**
the fixing means (4) is inserted loosely into the particular housing, in particular for small span widths or opening widths of a housing cutout (3) or a keyboard opening.

11. Input device according to one of the preceding claims,
**characterized in that**
the fixing means (4) is connected to the housing fixedly and/or as one piece, the fixing means (4) preferably being designed as a stamped-bent sheet metal part.

12. Input device according to one of the preceding claims,
**characterized in that**
the fixing means (4) and an associated housing part (2, 2a) have a one-material design, and are produced in one piece in essentially the same manufacturing step.

13. Input device according to one of the preceding claims,
**characterized in that**
a three-dimensional shape of a keyboard surface or user interface (O) is achieved using the fixing means (4).

14. Input device according to the preceding claim,
**characterized in that**
the fixing means (4) is configured as ESD protection.

15. Module for inputting signals in an electrical and/or mechanical form,
**characterized in that**
the module includes an input device (1) according to one or more of the preceding claims.

16. Mobile telephone or other transmitting and/or receiving unit for transmitting and/or representing data in the form of text data and/or image data, with or without a tone, which are coded according to the same or different standards as elements of a data volume to be transmitted,
**characterized in that**
the mobile telephone includes an input device according to one of preceding Claims 1 through 14 and/or a module according to the preceding claim, and is configured in particular as a subscriber terminal.

17. Method for producing an input device, in particular according to one or more of Claims 1 through 14, in which a flexible support (7) having at least one cap (9) for forming at least one button is produced,
**characterized in that**
the flexible support (7) together with at least one projection (10) is partially guided through a recess (6) in a fixing means (4), and the at least one cap (9), in particular as the result of a thermoplastic shaping and/or reshaping process, is molded onto the flexible support (7) after the fixing means (4) is assembled with the flexible support.

18. Method according to the preceding claim,
**characterized in that**
the at least one cap is made of an in particular translucent material as an individual part and is connected to the flexible support.

19. Method according to one of the two preceding claims,
**characterized in that**
the at least one cap (9) is fixed at and/or on a projection (10) of the flexible support (7) by gluing, welding, and/or positive-fit connection, with or without thermal treatment, or combinations thereof.

## Revendications

1. Dispositif d'entrée, en particulier pour un téléphone mobile, comportant au moins un dôme (9) qui est assemblé rigidement à un support flexible (7) pour la formation d'au moins une touche correspondante, de telle sorte qu'un signal d'entrée est produit par la pression d'une touche ainsi constituée, dans lequel, entre un premier plan (B) ayant l'au moins un dôme (9) et un deuxième plan (A) du support flexible (7) relié à l'au moins un dôme (9), est disposé au moins un moyen de fixation mécaniquement solide (4) de telle sorte que l'au moins un dôme (9) forme avec le support flexible (7) une transmission de force sensiblement ponctuelle à travers un plan du moyen de fixation (4), **caractérisé par le fait que** le moyen de fixation (4) est conformé dans une région d'au moins un bord d'extrémité (15) de manière à fixer le dispositif d'entrée (1) dans ou à un boîtier.

2. Dispositif d'entrée selon la revendication 1, **caractérisé par le fait que** le moyen de fixation mécaniquement solide (4) est constitué par une tôle métallique.

3. Dispositif d'entrée selon l'une des deux revendications précédentes, **caractérisé par le fait que** le moyen de fixation (4) est réalisé sous la forme d'une grille présentant des évidements, en particulier sous la forme de découpes, à travers lesquels l'au moins une touche est apte à se déplacer dans des limites nécessaires dans une direction d'actionnement (P).

4. Dispositif d'entrée selon l'une des revendications précédentes, **caractérisé par le fait que**, dans la région de la surface de commande (O), l'au moins un dôme (9) présente, perpendiculairement à une direction d'actionnement (P) dans au moins une direction de l'espace, une dimension qui est plus grande qu'un ajour (6) dans le moyen de fixation (4).

5. Dispositif d'entrée selon l'une des revendications précédentes, **caractérisé par le fait que**, sur un côté extérieur pouvant être commandé ou une surface de commande (0), l'au moins un dôme (9) est conformé de façon à faire saillie au-delà de l'évidement considéré (6) et à traverser les évidements.

6. Dispositif d'entrée selon l'une des revendications précédentes, **caractérisé par le fait que** l'au moins un dôme (9) présente au moins dans un plan de coupe parallèle à la direction d'actionnement (P), une forme de surface de section à peu près en champignon.

7. Dispositif d'entrée selon l'une des revendications précédentes, **caractérisé par le fait qu'**au moins une saillie (10) du support flexible (7) est conformée de manière à traverser les évidements (6) dans le moyen de fixation solide (4) et est recouverte par l'au moins un dôme (9) fixé à l'au moins une saillie (10).

8. Dispositif d'entrée selon l'une des revendications précédentes, **caractérisé par le fait qu'**au moins un bord d'extrémité du moyen de fixation (4) servant à fixer le dispositif d'entrée (1) dans ou à un boîtier est réalisé à la façon d'une sorte de rebord et/ou bourrelet débordant (16).

9. Dispositif d'entrée selon la revendication précédente, **caractérisé par le fait que** deux bords d'extrémité opposés (15) du moyen de fixation (4) sont constitués chacun par une sorte de rebord et/ou bourrelet débordant (16).

10. Dispositif d'entrée selon l'une des revendications précédentes, **caractérisé par le fait que** le moyen de fixation (4) est emboîté sans serrage dans le boîtier correspondant, en particulier dans le cas de petites largeurs libres ou largeurs d'ouverture d'un ajour de boîtier (3) ou d'une ouverture de clavier.

11. Dispositif d'entrée selon l'une des revendications précédentes, **caractérisé par le fait que** le moyen de fixation (4) est assemblé rigidement au boîtier et/ou est d'une seule pièce avec ce dernier, le moyen de fixation (4) étant, de préférence, constitué par un une pièce de tôle découpée-pliée.

12. Dispositif d'entrée selon l'une des revendications précédentes, **caractérisé par le fait que** le moyen de fixation (4) et une partie de boîtier correspondante (2, 2a) sont réalisés en une seule matière et en une seule pièce dans un pas de fabrication sensiblement commun.

13. Dispositif d'entrée selon l'une des revendications précédentes, **caractérisé en ce qu'**une forme tridimensionnelle d'une surface de clavier ou d'une surface utilisateur (O) est réalisée avec utilisation du moyen de fixation (4).

14. Dispositif d'entrée selon la revendication précédente, **caractérisé par le fait que** le moyen de fixation (4) est constitué par une protection ESD.

15. Module pour l'entrée de signaux de forme électrique et/ou mécanique, **caractérisé par le fait qu'**il comprend un dispositif d'entrée (1) selon une ou plusieurs des revendications précédentes.

16. Téléphone mobile ou autre unité d'émission et/ou réception pour la transmission et/ou la représentation de données sous la forme de données de textes et/ou d'images avec ou sans son, qui sont codées sous la forme d'éléments d'une quantité de données selon des standards identiques ou différents qu'il s'agit de transmettre, **caractérisé par le fait que** le téléphone mobile comprend un dispositif d'entrée selon l'une des revendications précédentes 1 à 14 et/ou un module selon la revendication précédente et constitue en particulier un terminal d'abonné.

17. Procédé de fabrication d'un dispositif d'entrée, en particulier selon une ou plusieurs des revendications 1 à 14, dans lequel un support flexible (7) ayant au moins un dôme (9) est réalisé pour constituer au moins une touche, **caractérisé par le fait que** le support flexible (7) est engagé partiellement par au moins une saillie (10) à travers un évidement (6) d'un moyen de fixation (4) et l'au moins un dôme (9) est formé sur le support flexible (7), en particulier en tant que résultat d'un procédé de façonnage et/ou transformation thermoplastique après un assemblage du moyen de fixation (4) au support flexible.

18. Procédé selon la revendication précédente, **caractérisé par le fait que** l'au moins un dôme est fabriqué en tant que pièce détachée en une matière en particulier translucide et est assemblé au support flexible.

19. Procédé selon l'une des revendications précédentes, **caractérisé par le fait que** l'au moins un dôme (9) est fixé à et/ou sur un une saillie (10) du support flexible (7) par collage, soudage et/ou assemblage par complémentarité de forme avec ou sans traitement thermique ou combinaisons de ces opérations.
